# EUROPÄISCHE PATENTSCHRIFT

(11) **EP 0 447 803 B1**
(45) Veröffentlichungstag und Bekanntmachung des Hinweises auf die Patenterteilung: **07.09.1994**
(21) Anmeldenummer: 91102143.4
(22) Anmeldetag: 15.02.1991
(51) Int. Cl.: B60S 1/34

(54) **Wischvorrichtung für Scheiben von Kraftfahrzeugen**
Wiping arrangement for automobile vehicle windows
Installation d'essuyage pour vitres de véhicules automobiles

(30) Priorität: 15.03.1990 DE 4008352
(43) Veröffentlichungstag der Anmeldung: 25.09.1991
(73) Patentinhaber: ROBERT BOSCH GMBH, 70442 Stuttgart (DE)
(72) Erfinder: Leutsch, Wolfgang, Dipl.-Ing., W-7582 Bühlertal (DE); Böringer, Axel, Dipl.-Ing., W-3006 Grossburgwedel (DE)

(56) Entgegenhaltungen:
- DE-A- 3 643 733
- DE-A- 3 918 106
- GB-A- 2 021 938
- PATENT ABSTRACTS OF JAPAN vol. 12, no. 222 (M-712)(3069) 24 Juni 88,& JP-A-63 20252 (MITSUBA) 27 Januar 88

## Beschreibung

Die Erfindung betrifft eine Wischvorrichtung für Scheiben von Kraftfahrzeugen nach der Gattung des Hauptanspruchs. Eine derartige aus der DE-A-36 43 733 bekannte Einrichtung weist zwar auch ein Gelenkstangensystem auf, mit dem die Vorspannkraft der Feder verändert werden kann. Die auf den mehrteilig ausgebildeten Wischerarm einwirkende Kraft bewirkt aber eine andere Hebelbewegung. Dadurch wird die Länge der Feder immer größer, und somit sind relativ hohe Verstellkräfte nötig, um die Verlängerung der Feder zu bewirken.

### Vorteile der Erfindung

Die erfindungsgemäße Wischvorrichtung mit den kennzeichnenden Merkmalen des Hauptanspruchs hat demgegenüber den Vorteil, daß sie dort, wo hohe Kräfte auftreten, was sowohl Luftkräfte wie Betätigungskräfte betrifft, besonders gut geeignet ist. Weitere Vorteile der Erfindung ergeben sich aus dem Unteranspruch.

### Zeichnung

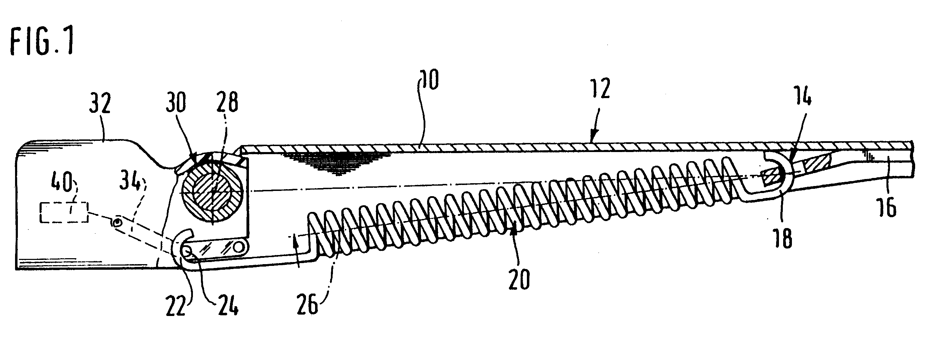

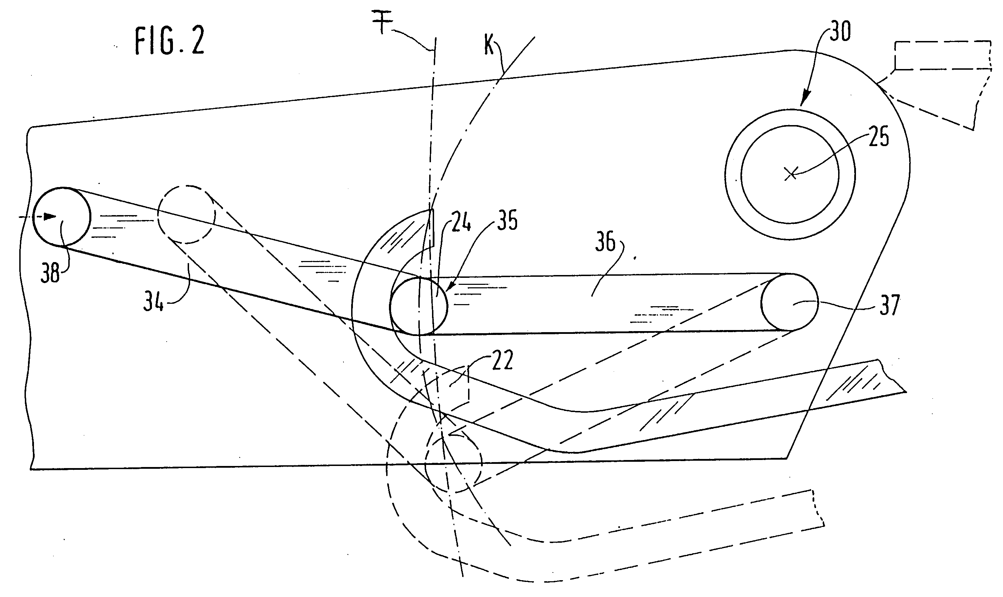

Ein Ausführungsbeispiel der Erfindung ist in der nachfolgenden Beschreibung und Zeichnung näher erläutert. Letztere zeigt in Figur 1 einen Teil einer Wischvorrichtung, in Figur 2 eine Einrichtung zur Veränderung der Wischarmauflagekraft.

### Beschreibung der Erfindung

In Figur 1 ist mit 10 ein Stegteil bezeichnet, das Teil eines Wischarms 12 ist. Am Stegteil 10 ist mit 14 eine Befestigungsstelle bezeichnet, die zu einem Ösenteil 16 gehört mit einer Bohrung, in welche das eine Ende 18 einer Zugfeder 20 eingehängt ist, welche eine bestimmte Anpreßkraft für die Scheibenwischer an der Scheibe des Fahrzeugs erzeugt. Das andere Ende 22 der Feder 20 ist an der Achse 24 eines Koppelpunkts eingehängt, auf den weiter unten im Zusammenhang mit Figur 2 näher eingegangen ist. Die Längsachse der Zugfeder 20 ist mit 26 bezeichnet.

Der Wischarm 12 ist um eine Achse 28 schwenkbar, an welcher ein Gelenk 30 angeordnet ist. Dieses befindet sich innerhalb eines Kunststoffgehäuses 32, auf das jedoch nicht näher eingegangen ist, da nicht erfindungswesentlich.

In Figur 2 ist auf die Einrichtung zur Veränderung der Wischarmauflagekraft näher eingegangen. Diese Einrichtung besteht aus zwei Gelenkstangen 34, 36, die an ihrem aneinanderstoßenden Koppelpunkt 35 mittels einer Achse 24 gelenkig verbunden sind. Das andere Ende der Gelenkstange 36 ist an einer gestellfesten Achse 37 gelagert, und das andere Ende der Koppelstange 34 ist mit einer Betätigungseinrichtung 40 verbunden, durch welche sie horizontal verschoben werden kann, und zwar in Richtung zur Achse 25 und etwa auf dieser Höhe. Wie Figur 1 bereits zeigt, legt sich die Öse 22 des linken Federendes um die Achse 24.

In der in Figur 2 dargestellten Stellung hat die Zugfeder 20 eine bestimmte Vorspannung, mit welcher sie die Wischerblätter an die Scheiben des Kraftfahrzeugs drückt. Soll die Andrückkraft vergrößert werden, so wird durch die Einrichtung 40 die Achse 38 der Koppelstange 34 in Richtung zur Achse 25 hin verschoben. Dadurch beschreibt der Koppelpunkt der beiden Koppelstangen bzw. die Achse 24 einen Bogen auf einem Kreis K, und zwar derart, daß dieser Koppelpunkt sich nach unten bewegt. Am Ende dieser Bewegung gelangt die Achse 24 an einen Punkt, welcher weiter entfernt ist von der Befestigungsstelle 14 des anderen Federendes, als dies zuvor der Fall war. Dadurch wird die Vorspannung der Zugfeder vergrößert.

Bei der Betätigungseinrichtung 40 für die Koppelstange 34 handelt es sich um einen Linearantrieb, beispielsweise einen Elektromotor mit Spindel und Spindelmutter oder einen Hydraulik- bzw. Pneumatikzylinder. Auf diese Weise erhält man eine verhältnismäßig große Veränderung der Auflagekraft bei kleinen Verstellwegen. Die Wischarmgeometrie und der Auflagekraft-Verstellmechanismus können so aufeinander abgestimmt werden, daß keine Federlängung auftritt. Die Bauweise der Einrichtung ist sehr kompakt.

## Patentansprüche

1. Wischvorrichtung für Scheiben von Kraftfahrzeugen mit einer Einrichtung zur Veränderung der Wischarmauflagekraft, mit einer vorzugsweise pendelnd angetriebenen Wischerwelle, an der ein erstes Teil eines in seiner Längserstreckung geteilten Wischerarms (12) befestigt und am freien Ende eines anderen, mit dem ersten Wischerarmteil um eine Achse für den Wischerarm gelenkig verbundenen zweiten Wischerarmteils ein auf die zu wischende Scheibe durch eine Zugfeder (20) belastetes Wischelement angeordnet ist, wobei ein Gelenkstangensystem vorgesehen ist, um die Vorspannung der Federkraft zu verändern, wobei das Gelenkstangensystem zwei Gelenkstangen (34, 36) hat, die mit ihrem einen Ende an ihrem Koppelpunkt (35) an einer Achse (24) gelenkig verbunden sind, während das andere Ende der ersten Gelenkstange (36) um eine am ersten Teil (32) gestellfeste Achse (37) verschwenkbar ist und das andere Ende der zweiten Gelenkstange (34) durch eine Kraft verschiebbar ist, wobei das dem Wischelement entfernte Ende der Zugfeder (20) an der Achse (24) des beweglichen Koppelpunktes (35) eingehängt ist, dadurch gekennzeichnet, daß das andere Ende der zweiten Gelenkstange (34) durch die Kraft in Richtung zur gestellfesten Achse der ersten Gelenkstange (36) hin verschiebbar ist und die gestellfeste Achse (37) der ersten Gelenkstange (36) etwas unter der Achse (25) für den Wischerarm liegt, und daß sich die Gelenkstangen (34, 36) in entgegengesetzter Richtung wie der Wischerarm erstrecken.

2. Vorrichtung nach Anspruch 1, dadurch gekennzeichnet, daß die Verstellkraft für das Gelenkstangensystem durch einen Linearantrieb erzeugt wird, insbesondere durch einen Elektromotor mit Spindel und Spindelmutter, einen Hydraulikzylinder oder einen Pneumatikzylinder.

## Claims

1. Device for wiping glass panes in motor vehicles, having an apparatus for varying the wiper arm pressure, and having a wiper shaft which is preferably oscillatingly driven and to which a first part of a wiper arm (12) divided in its lengthwise direction is fastened, while at the free end of another, second wiper arm part, which is connected to the first wiper arm part for pivoting about a pivot for the wiper arm, a wiper element urged by a tension spring (20) towards the glass pane which is to be wiped is arranged, a toggle link system being provided to vary the initial tension of the spring force, said toggle link system comprising two toggle links (34, 36) which are pivotally connected at one end, at their coupling point (35), at a pivot (24) while the other end of the first toggle link (36) is pivotable about a pivot (37) fixed to the frame on the first part (32) and the other end of the second toggle link (34) is displaceable by a force, the end of the tension spring (20) remote from the wiper element being attached to the pivot (24) of the movable coupling point (35), characterized in that the other end of the second toggle link (34) is displaceable by the force in the direction of the pivot, fixed to the frame, of the first toggle link (36), and the pivot (37), fixed to the frame, of the first toggle link (36) lies slightly below the pivot (25) for the wiper arm, and in that the toggle links (34, 36) extend in the opposite direction to the wiper arm.

2. Device according to Claim 1, characterized in that the displacing force for the toggle link system is produced by a linear drive, particularly by an electric motor provided with a spindle and spindle nut, a hydraulic cylinder or a pneumatic cylinder.

## Revendications

1. Dispositif d'essuyage pour des vitres de véhicules automobiles avec un mécanisme pour modifier la force d'appui du bras du montage d'essuie-glace, avec un axe d'essuie-glace commandé de préférence de manière pendiculaire, sur lequel est fixée une première pièce d'un bras d'essuie-glace (12) divisé dans son développement longitudinal et à l'extrémité libre d'une deuxième pièce du bras d'essuie-glace reliée par articulation à la première pièce du bras d'essuie-glace autour d'un axe du bras d'essuieglace est disposé un élément de balayage chargé sur la vitre à essuyer par un ressort de traction (20), et un système des barres articulées est prévu, pour modifier la prétension de la force du ressort, et le système de barres articulées a deux barres articulées (34, 36), qui sont reliées par articulation à une de leur extrémité en leur point de bielle (35) sur un axe (24), tandis que l'autre extrémité de la première barre articulée (36) peut pivoter autour d'un axe (37) fixé à la première pièce (32) et l'autre extrémité de la deuxième barre articulée (34) peut être déplacée par une force, et l'extrémité éloignée de l'élément de balayage du ressort de traction (20) est accrochée à l'axe (24) du point de couplage (35) mobile, caractérisé en ce que l'autre extrémité de la deuxième barre articulée (34) peut être déplacée par la force en direction de l'axe fixe de la première barre articulée (36) et l'axe fixe (37) de la première barre articulée (36) est situé un peu en dessous de l'axe (25) du bras de montage de l'essuie-glace, et en ce que les barres articulées (34, 36) s'étendent en sens opposé comme le bras d'essuie-glace.

2. Dispositif selon la revendication 1, caractérisé en ce que la force de déplacement du système de barres articulées est créée par une commande linéaire, en particulier par un moteur électrique avec tige et écrou, un vérin hydraulique ou un vérin pneumatique.
